(19) Europäisches Patentamt
European Patent Office
Office européen des brevets

(11) **EP 1 988 653 A1**

(12) **EUROPEAN PATENT APPLICATION**
published in accordance with Art. 158(3) EPC

(43) Date of publication:
05.11.2008 Bulletin 2008/45

(51) Int Cl.:
*H04J 15/00* (2006.01)　　*H04B 7/04* (2006.01)
*H04B 7/06* (2006.01)　　*H04B 7/08* (2006.01)
*H04B 7/10* (2006.01)　　*H04B 7/26* (2006.01)

(21) Application number: 07739510.1

(22) Date of filing: 23.03.2007

(86) International application number:
PCT/JP2007/056069

(87) International publication number:
WO 2007/111266 (04.10.2007 Gazette 2007/40)

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 24.03.2006　JP 2006083897

(71) Applicant: MATSUSHITA ELECTRIC INDUSTRIAL
CO., LTD.
Osaka 571-8501 (JP)

(72) Inventors:
• IMAI, Tomohiro
Matsushita Electric Industrial Co.,Ltd.
2-1-61, Shiromi, Chuo-ku
Osaka 540-6207 (JP)
• HOSHINO, Masayuki
Matsushita Electric Industrial Co.,Ltd.
2-1-61, Shiromi, Chuo-ku
Osaka 540-6207 (JP)
• YUDA, Yasuaki
Matsushita Electric Industrial Co.,Ltd.
2-1-61, Shiromi, Chuo-ku
Osaka 540-6207 (JP)

(74) Representative: Grünecker, Kinkeldey,
Stockmair & Schwanhäusser
Anwaltssozietät
Leopoldstraße 4
80802 München (DE)

(54) **RADIO COMMUNICATION TERMINAL AND RADIO COMMUNICATION BASE STATION DEVICE**

(57) Provided are a radio communication terminal and a radio communication base station device which are installed in a Multi-User MIMO system even if the ability to suppress interference is low. According to beam combination information fed back from NON-MIMO UE, and beam information and a CQI fed back from another MIMO UE, a scheduler section (102) allocates a space resource to the NON-MIMO UE and allocates the remaining resource to the another MIMO UE. According to the beam combination information, a beam weight generating section (104) generates weight. A transmission beam forming section (105) multiplies each stream outputted from modulation sections (103-1, 103-2) by the weight to form a transmission beam.

FIG.3

## Description

Technical Field

The present invention relates to a wireless communication terminal apparatus and wireless communication base station apparatus.

Background Art

There are a variety of service modes in wireless cellular systems represented by, for example, mobile telephones in recent years, and these systems are required to transmit not only speech data but also a large volume of data such as still images and video images. In response to this demand, a MIMO (Multi-Input Multi-Output) system that realizes high frequency utilization efficiency is actively studied.

The standardization 3GPP LTE (Long Term Evolution) of the next-generation cellular system requires a peak rate of 100 Mbps in downlink, and a MIMO system is introduced as a technique to realize this. As a space multiplexing scheme in the MIMO system, use of SDM (space division multiplexing: also known as "Single-User MIMO") and SDMA (space division multiple access: also known as "Multi-User MIMO") is studied.

The Single-User MIMO limits allocation of space resources to a single user, and so improvement of a peak rate is expected. The Single-User MIMO performs user multiplexing in the time domain and frequency domain, and so produces no user interference in the spatial domain. On the other hand, the Multi-User MIMO allocates space resources to a plurality of users, thereby obtaining multi-user diversity gains, so that improvement of sector (cell) throughput can be expected. Particularly, when the cell radius is large, throughput improves significantly. There is also a report on a simulation result that average sector throughput improves by 15% at a maximum and cell edge user throughput improves by 87% at a maximum with respect to the Single-User MIMO.

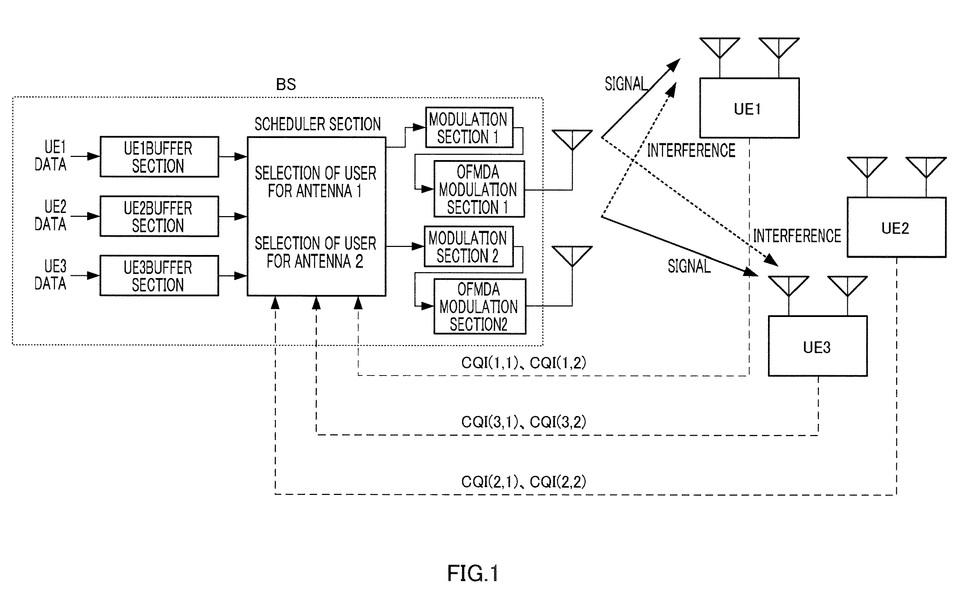

FIG.1 shows a schematic diagram of a Multi-User MIMO system when there are a base station (hereinafter, "BS") provided with two antennas and mobile stations (hereinafter, "UE") for three users (UE1 to 3), each provided with two antennas (see Non-Patent Document 1).

In FIG.1, each UE receives an orthogonal pilot symbol transmitted from each antenna of the BS and calculates a CQI (=SINR). Each UE then feeds back the CQI (i, j) of each antenna of the BS to the BS. Here, i is a user number (i=1 to 3) and j is an antenna number (j=1, 2) of the BS.

A scheduler section of the BS allocates a user of a good CQI to each antenna based on the CQI (i, j) fed back from each UE and performs Multi-User MIMO communication. In FIG.1, UE1 is allocated to antenna 1 and UE3 is allocated to antenna 2.

Non-Patent Document 1 : "Throughput comparison of single user and multi user MIMO for Downlink OFDMA E-UTRA," Texas Instruments, San Diego, USA, 10 - 14, October, 2005, 3GPP TSG RAN WG1 #42b is R1-051056

Disclosure of Invention

Problems to be Solved by the Invention

However, the above Multi-User MIMO needs to cancel interference from other users, and therefore the UE needs to have signal separation capability (functions such as ZF and MMSE if the number of antennas is two or more). Therefore, a non-MIMO UE provided with one antenna or having no signal separation capability, that is, a terminal having low interference suppression capability has a problem that its received SINR deteriorates due to the interference from other users even when the terminal has a good received SNR, and therefore cannot be accommodated in the Multi-User MIMO system.

It is therefore an object of the present invention to provide a wireless communication terminal apparatus and wireless communication base station apparatus that can be accommodated in a Multi-User MIMO system even if interference suppression capability is low.

Means for Solving the Problem

The wireless communication terminal apparatus according to the present invention adopts a configuration including: a reception section that receives a pilot signal transmitted from a wireless communication base station apparatus; a channel estimation section that performs channel estimation using the pilot signal and calculates a channel estimation value; and a beam combination determination section that has a plurality of pieces of beam information formed by the wireless communication base station apparatus, determines a combination of a desired beam of maximum received quality determined from the channel estimation value and beams for other users, who are targets of multi-user communication, and feeds back the determined beam combination to the wireless communication base station apparatus.

The wireless communication base station apparatus according to the present invention adopts a configuration including: a beam formation section that forms a plurality of beams; an allocation section that allocates wireless communication terminal apparatuses to space resources based on information of combination of a desired beam fed back from a wireless communication terminal apparatus and beams for other users, who are targets of multi-user communication, and desired beam information fed back from other wireless communication terminal apparatuses; and a beam weight generation section that generates beam weights for controlling the beam formation section, based on beam information fed back from the wireless communication terminal apparatuses allocated to the space resources.

The transmission beam formation method according to the present invention includes: determining a combination of a desired beam of maximum received quality and beams for other users, who are targets of multi-user communication, based on a plurality of pieces of beam information formed by a wireless communication base station apparatus and feeding back the determined beam combination from a wireless communication terminal apparatus to the wireless communication base station apparatus; and forming transmission beams to the wireless communication terminal apparatus and the other users based on the fed back beam combination.

Advantageous Effect of the Invention

According to the present invention, it is possible to accommodate a wireless communication terminal apparatus having low interference suppression capability in a Multi-User MIMO system.

Brief Description of Drawings

FIG. 1 is a schematic view of a Multi-User MIMO system disclosed in Non-Patent Document 1;
FIG.2 is a conceptual diagram showing a communication mode of the Multi-User MIMO system;
FIG.3 is a block diagram showing a configuration of the BS shown in FIG.2;
FIG.4 shows a weight table of beam combination information of the beam weight generation section shown in FIG.3;
FIG.5 is a flowchart showing an operation of the scheduler section shown in FIG.3;
FIG.6 is a block diagram showing a configuration of the non-MIMO UE shown in FIG.2;
FIG.7 is a block diagram showing a configuration in the beam combination determination section shown in FIG.6;
FIG.8 shows the relationship between gains of transmission beams formed by three transmission beam weights and directions of arrival of the signals;
FIG.9 is a block diagram showing a configuration of the MIMO UE shown in FIG.2;
FIG.10 is a sequence diagram showing operations of the BS, non-MIMO UE and MIMO UE shown in FIG.2;
FIG.11 is a conceptual diagram showing how a transmission beam is formed;
FIG.12 is a block diagram showing a configuration of a UE according to Embodiment 2 of the present invention;
FIG.13 is a flowchart showing an operation of the beam information determination section shown in FIG. 12;
FIG.14 is a sequence diagram showing an operation between a UE and BS according to Embodiment 2 of the present invention;
FIG.15 is a block diagram showing a configuration of a BS according to Embodiment 3 of the present invention;
FIG.16 shows a terminal performance table of the terminal performance determination section shown in FIG.15;
FIG.17 shows an intra-cell terminal performance determining table of the terminal performance determination section shown in FIG.15;
FIG.18 is a block diagram showing a configuration of a UE according to Embodiment 3 of the present invention;
FIG.19 is a flowchart showing an operation of the beam information determination section shown in FIG. 18; and
FIG.20 is a sequence diagram showing an operation between the UE and BS according to Embodiment 3 of the present invention.

Best Mode for Carrying Out the Invention

Now, embodiments of the present invention will be described in detail with reference to the accompanying drawings. However, with the embodiments, components having the same function will be assigned the same reference numerals and overlapping explanations will be omitted.

(Embodiment 1)

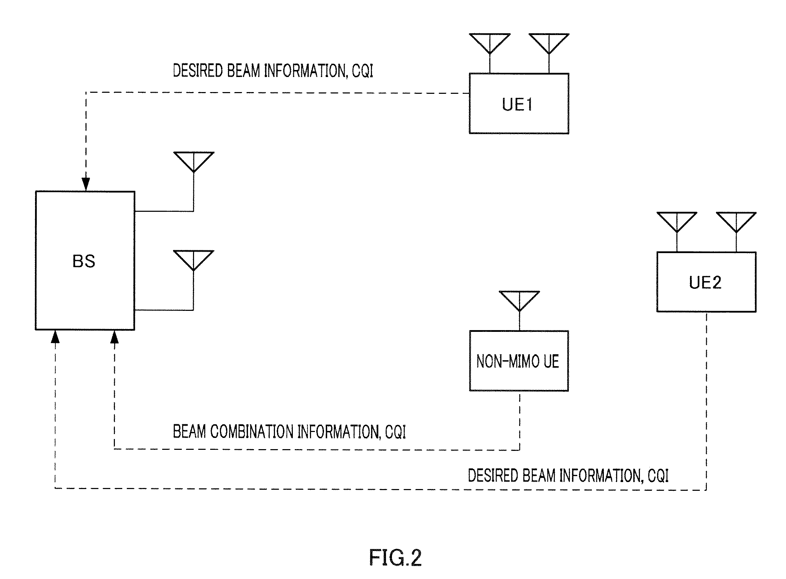

With Embodiment 1 of the present invention, as shown in FIG.2, the number of BS antennas is two, and the number of UE's to be accommodated in the cell of this BS is three. Furthermore, of the three UE's, one is a non-MIMO UE with one antenna and the remaining two UE's are MIMO UE's with two antennas. Furthermore, the BS forms a transmission beam, and information of this beam (beam information) is shared between the BS and UE.

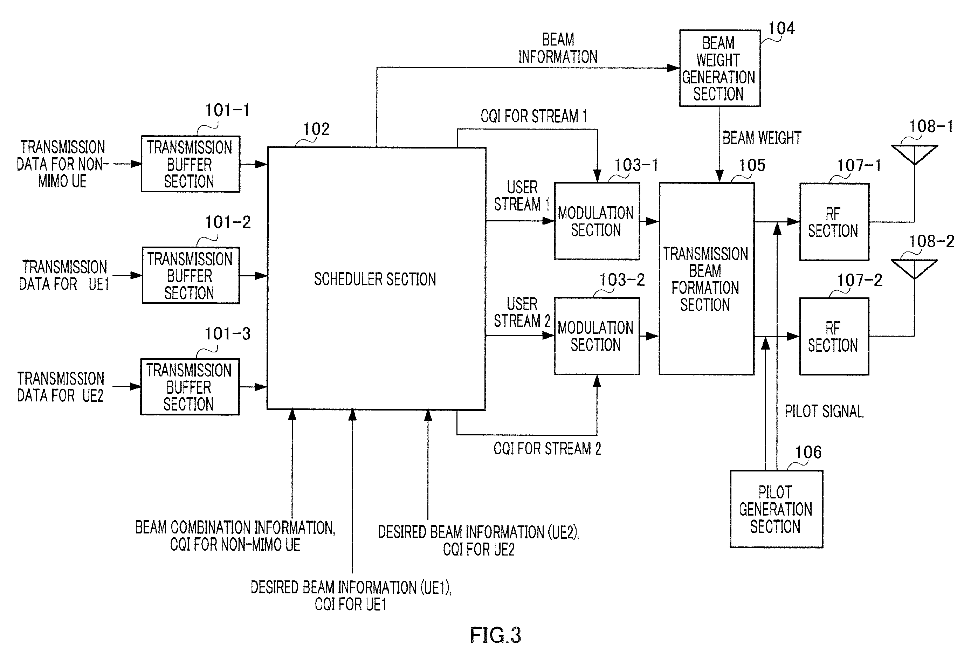

FIG.3 is a block diagram showing a configuration of the BS shown in FIG.2. In this figure, transmission buffer section 101-1 accumulates transmission data for non-MIMO UE and outputs the accumulated transmission data to scheduler section 102. Transmission buffer sections 101-2 and 101-3 accumulate transmission data for UE1 and transmission data for UE2, respectively, and output the accumulated transmission data to scheduler section 102.

Scheduler section 102 receives feedback of beam combination information which will be described later and a CQI for non-MIMO from the non-MIMO UE, and desired beam information and CQI's for UE's from UE1 and UE2. Scheduler section 102 allocates users to space resources based on the fed back information and outputs transmission data of the allocated users to modulation sections 103-1 and 103-2 as user streams 1 and 2, respectively. Furthermore, scheduler section 102 also outputs CQI's matching the user streams to modulation sections 103-1 and 103-2. Furthermore, scheduler section 102 also outputs beam information to beam weight generation section 104.

Modulation sections 103-1 and 103-2 determine a modulation scheme and coding rate (MCS: Modulation and Coding Scheme) from the CQI's outputted from scheduler section 102 and modulate and encode the user streams outputted from scheduler section 102 according to the determined modulation scheme and coding rate. The modulated and coded user streams are outputted to transmission beam formation section 105.

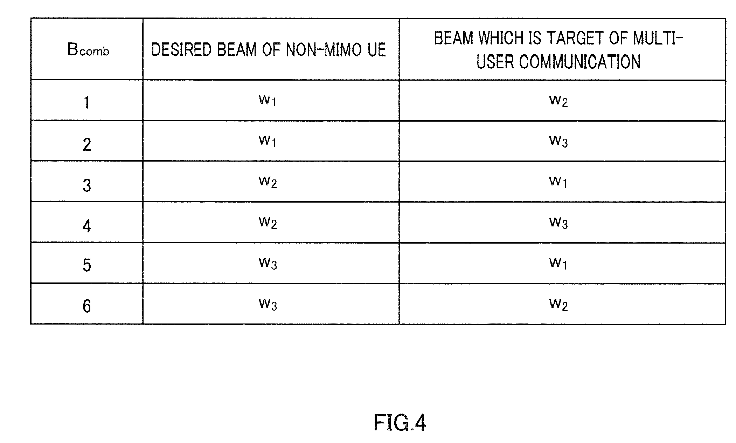

Beam weight generation section 104 has a weight table shared between the BS and each UE, reads beam weights matching the beam information outputted from scheduler section 102 from the weight table and outputs the read beam weights to transmission beam formation section 105. Here, if, for example, three transmission beams are shared between the BS and UE's, and weight vectors matching the respective transmission beams are represented as "$w_1$," "$w_2$" and "$w_3$," the weight table of beam combination information $B_{comb}$ can be represented as shown in FIG.4.

From FIG.4, when, for example, $B_{comb}=1$, the weight vector of the desired beam of the non-MIMO UE is $w_1$, the weight vector of the desired beam of the MIMO UE, which is a target of multi-user communication, is $w_2$, and weights $w_1$ and $w_2$ are outputted to transmission beam formation section 105 together with stream index information.

Furthermore, when there is no non-MIMO UE in the cell, beam information $B_{UEi}$ of each UE shows a weight, and so beam information $B_{UEi}$ is outputted to transmission beam formation section 105 together with the stream index information.

Transmission beam formation section 105 multiplies the user streams outputted from modulation sections 103-1 and 103-2 by the beam weights outputted from beam weight generation section 104 and forms transmission beams. The user streams multiplied by weights are outputted to RF sections 107-1 and 107-2. Here, if the user streams outputted from modulation sections 103-1 and 103-2 are $S_1$ and $S_2$, respectively, streams multiplied by weights and outputted to RF sections 107-1 and 107-2 are $x_1$ and $x_2$, respectively, and beam weights outputted from beam weight generation section 104 are represented as $[w_1, w_2]$, $x_1$ and $x_2$ can be represented by following equation 1.

[1]

$$\begin{bmatrix} x_1 \\ x_2 \end{bmatrix} = \begin{bmatrix} w_1, w_2 \end{bmatrix} \begin{bmatrix} s_1 \\ s_2 \end{bmatrix} \quad \dots \text{(Equation 1)}$$

Pilot generation section 106 generates pilot signals and outputs the generated pilot signals to RF sections 107-1 and 107-2, respectively.

RF sections 107-1 and 107-2 perform predetermined radio transmission processing such as up-conversion on the user streams outputted from transmission beam formation section 105 and the pilot signals outputted from pilot generation section 106 and transmit the user streams and pilot signals from antennas 108-1 and 108-2.

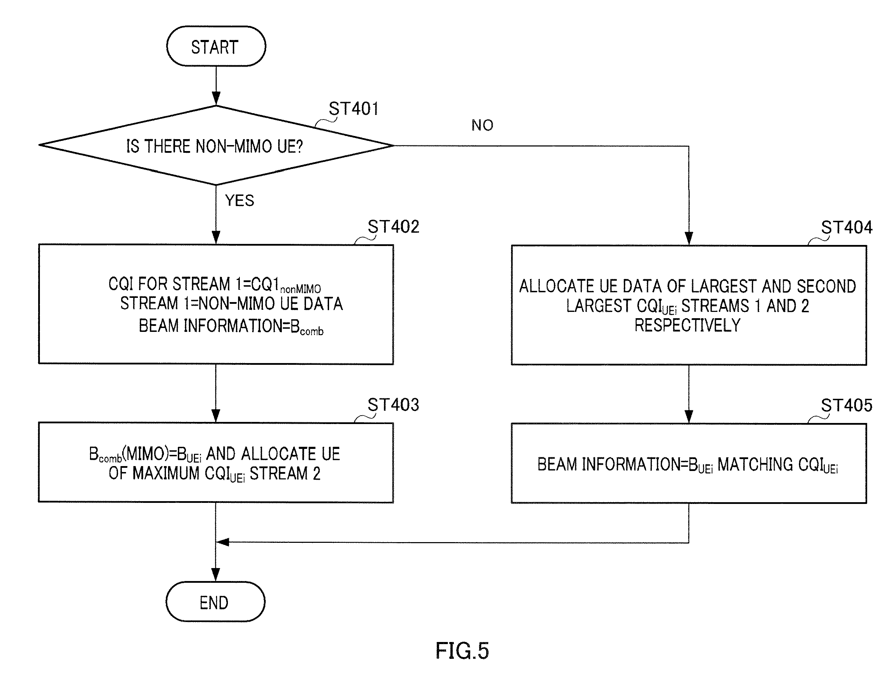

Next, the operation of above-described scheduler section 102 will be explained using FIG.5. Here, the beam combination information fed back from the non-MIMO UE is represented as "$B_{comb}$" and the CQI is represented as "$CQI_{nonMIMO}$." Furthermore, as for the beam combination information, the desired beam of the non-MIMO UE is represented as "$B_{comb}$ (non-MIMO)," and the desired beam of the MIMO UE is represented as "$B_{comb}$ (MIMO)." Furthermore, the desired beam information fed back from UE1 and UE2 are represented as "$B_{UEi}$ (I=1, 2)," and CQI is represented as "$CQI_{UEi}$ (i=1, 2)."

In FIG.5, in step (hereinafter, "ST") 401, scheduler section 102 checks whether or not there is the non-MIMO UE in the cell. When each UE synchronizes with the BS, each UE reports terminal information showing whether each terminal is a MIMO UE or non-MIMO UE, to the BS, and so the BS can check whether or not there is the non-MIMO UE in the cell. The flow proceeds to ST402 when there is the non-MIMO UE or proceeds to ST404 when there is no non-MIMO UE.

In ST402, a beam is allocated to the non-MIMO UE preferentially over the MIMO UE, and so scheduler section 102 allocates $CQI_{nonMIMO}$, which is the CQI of the non-MIMO UE, as a CQI for stream 1 and allocates non-MIMO UE data outputted from transmission buffer section 101-1 to user stream 1. Furthermore, beam information to be outputted to beam weight generation section 104 is beam combination information $B_{comb}$ fed back from the non-MIMO UE.

In ST403, the number of users that the BS can allocate is two, and so the other space resource is allocated to UE1 or UE2. In this case, desired beam information $B_{comb}$ (MIMO) of the MIMO UE reported by the non-MIMO UE matches desired beam information $B_{UEi}$ of each UE, and the other space resource is allocated to the UE of maximum $CQI_{UEi}$.

When, for example, $B_{comb}$ (MIMO)=$B_{UE1}$ and $B_{comb}$ (MIMO)≠$B_{UE2}$, UE1 is allocated to the other space resource, the data for UE1 outputted from transmission buffer section 101-2 is allocated to user stream 2, and the CQI for stream 2=$CQI_{UE1}$. Further, there is always the desired beam of the MIMO UE that matches the beam combination information. Furthermore, when there are many users in the cell and there are many users who satisfy $B_{comb}$ (MIMO)=$B_{UEi}$, a user of maximum $CQI_{UEi}$ is selected from those users.

On the other hand, in ST404, there is no non-MIMO UE in the cell, and so the UE's having the largest and second largest CQI's are allocated to streams 1 and 2, respectively, based on CQI information $CQI_{UEi}$ fed back from each UE.

In ST405, beam information outputted to beam weight generation section 104 is $B_{UEi}$. When, for example, UE1 and UE2 are allocated to streams 1 and 2, beam information outputted to beam weight generation section 104 are $B_{UE1}$ and $B_{UE2}$.

Although, with the present embodiment, the number of non-MIMO UE's is one, when there are a plurality of non-MIMO UE's in the cell, scheduler section 102 allocates one stream to the non-MIMO UE of the maximum CQI out of the plurality of non-MIMO UE's.

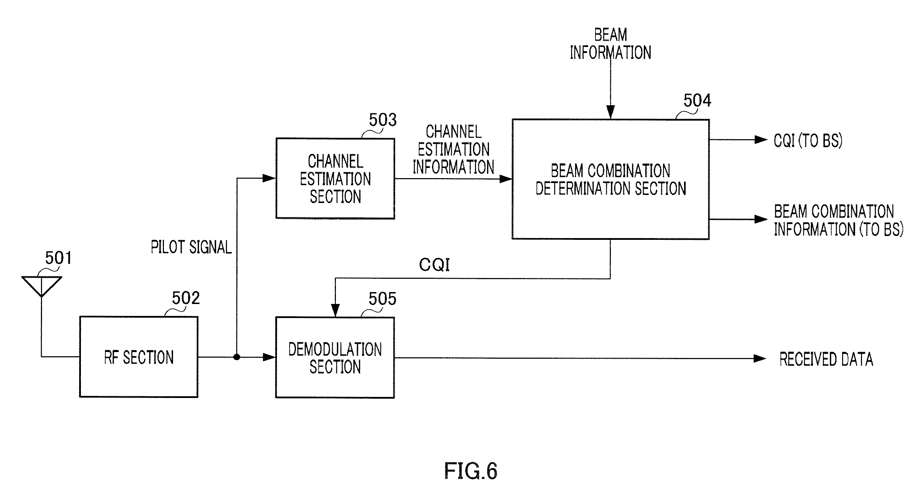

FIG.6 is a block diagram showing a configuration of the non-MIMO UE shown in FIG.2. In this figure, RF section 502 receives a signal transmitted from the BS shown in FIG.3 through antenna 501 and performs predetermined radio reception processing such as down-conversion on the received signal. A data portion of the signal subjected to the radio reception processing is outputted to demodulation section 505, and a pilot signal is outputted to channel estimation section 503.

Channel estimation section 503 performs channel estimation using the pilot signal outputted from RF section 502 and outputs the estimated value to beam combination determination section 504 as channel estimation information.

Beam combination determination section 504 calculates beam combination information and the CQI using the channel estimation information outputted from channel estimation section 503 and beam information shared between the BS and UE. The beam combination information and CQI are fed back to the BS shown in FIG.2. Furthermore, a CQI calculated in a previous frame is outputted to demodulation section 505. Further, beam combination determination section 504 will be described in detail later.

Demodulation section 505 determines a modulation scheme and coding rate (MCS) from the CQI outputted from beam combination determination section 504, performs demodulation and decoding processing on the data portion outputted from RF section 502 using the determined modulation scheme and coding rate and acquires received data.

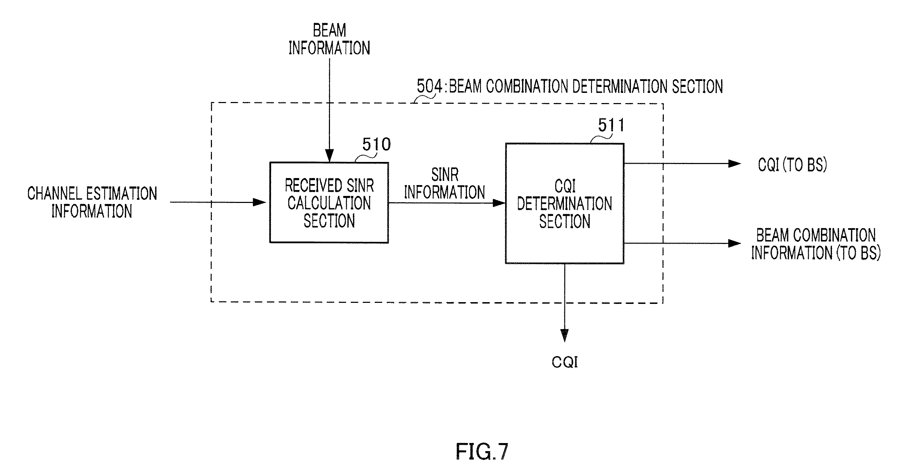

FIG.7 is a block diagram showing a configuration in beam combination determination section 504. In this figure, received SINR calculation section 510 calculates a received SINR in a case where each transmission beam is used from the channel estimation information outputted from channel estimation section 503 and beam information shared between the BS and UE. Received SINR calculation section 510 has the weight table shown in FIG.4. Here, if the channel estimation information is H and noise power is N, $SINR_i$ (i=1 to 6) upon combination of each beam (corresponds to each of $B_{comb}$=1 to 6) can be represented by following equations 2 to 7.

[2]

$$SINR_i = \left\| Hw_1 \right\|^2 \bigg/ N + \frac{\left\| w_1^* H^* Hw_2 \right\|^2}{\left\| Hw_i \right\|^2} \quad \ldots \quad (Equation\ 2)$$

[3]

$$SINR_2 = \left\| Hw_1 \right\|^2 \bigg/ N + \frac{\left\| w_1^* H^* Hw_3 \right\|^2}{\left\| Hw_1 \right\|^2} \quad \dots \quad \text{(Equation 3)}$$

[4]

$$SINR_3 = \left\| Hw_2 \right\|^2 \bigg/ N + \frac{\left\| w_2^* H^* Hw_1 \right\|^2}{\left\| Hw_2 \right\|^2} \quad \dots \quad \text{(Equation 4)}$$

[5]

$$SINR_4 = \left\| Hw_2 \right\|^2 \bigg/ N + \frac{\left\| w_2^* H^* Hw_3 \right\|^2}{\left\| Hw_2 \right\|^2} \quad \dots \quad \text{(Equation 5)}$$

[6]

$$SINR_5 = \left\| Hw_3 \right\|^2 \bigg/ N + \frac{\left\| w_3^* H^* Hw_1 \right\|^2}{\left\| Hw_3 \right\|^2} \quad \dots \quad \text{(Equation 6)}$$

[7]

$$SINR_6 = \left\| Hw_3 \right\|^2 \bigg/ N + \frac{\left\| w_3^* H^* Hw_2 \right\|^2}{\left\| Hw_3 \right\|^2} \quad \dots \quad \text{(Equation 7)}$$

$SINR_i$ (i=1 to 6) calculated in this way is outputted to CQI determination section 511.

CQI determination section 511 detects a maximum value of the SINR's outputted from received SINR calculation section 510 and feeds back the detected SINR to the BS as a CQI. Further, CQI determination section 511 also feeds back the beam combination information when the SINR becomes a maximum, to the BS. If the CQI fed back to the BS is $CQI_{nonMIMO}$, $CQI_{nonMIMO}$ can be represented by following equation 8.

[8]

$$CQI_{nonMIMO} = \max(SINR_i) \quad \dots \quad \text{(Equation 8)}$$

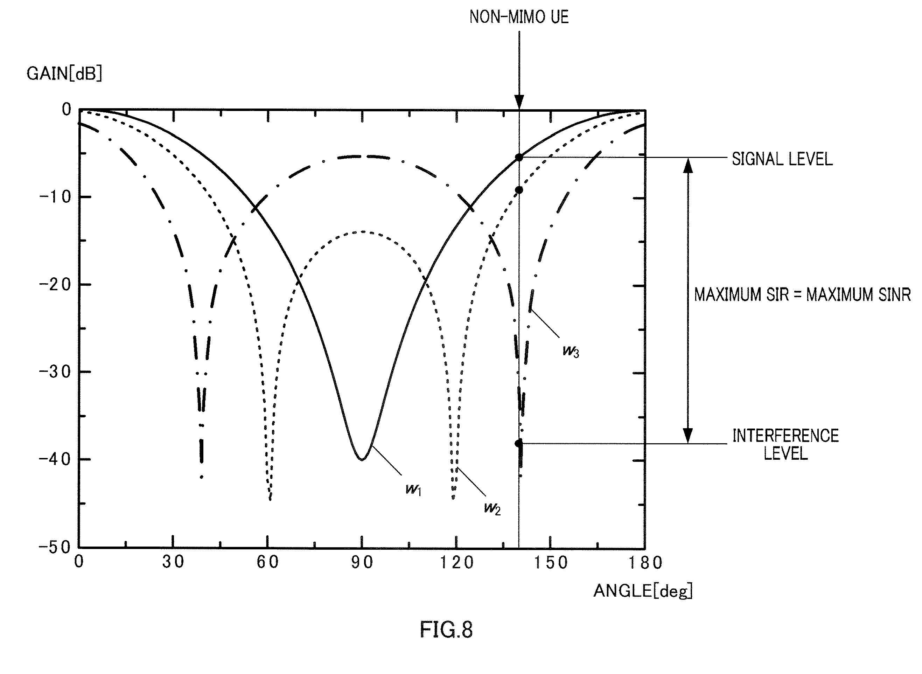

Here, the beam combination determining method in beam combination determination section 504 will be explained using FIG.8. FIG.8 shows the relationship between gains of transmission beams formed using three transmission beam weights and directions of arrival of the signals. In FIG.8, the solid line shows a transmission beam formed with transmission beam weight $w_1$, the dotted line shows a transmission beam formed with transmission beam weight $w_2$, and the dotted-dash line shows a transmission beam formed with transmission beam weight $w_3$.

Now, if the direction of arrival of a signal for non-MIMO UE is approximately 140 degrees and the transmission beam weight for non-MIMO UE is $w_1$ and the transmission beam weight for MIMO UE is $w_3$, the SIR, that is, the SINR becomes a maximum. The SINR in this case is fed back to the BS as a CQI. Furthermore, the beam combination is [$w_1$, $w_3$], and so $B_{comb}=2$ is fed back to the BS according to FIG.4.

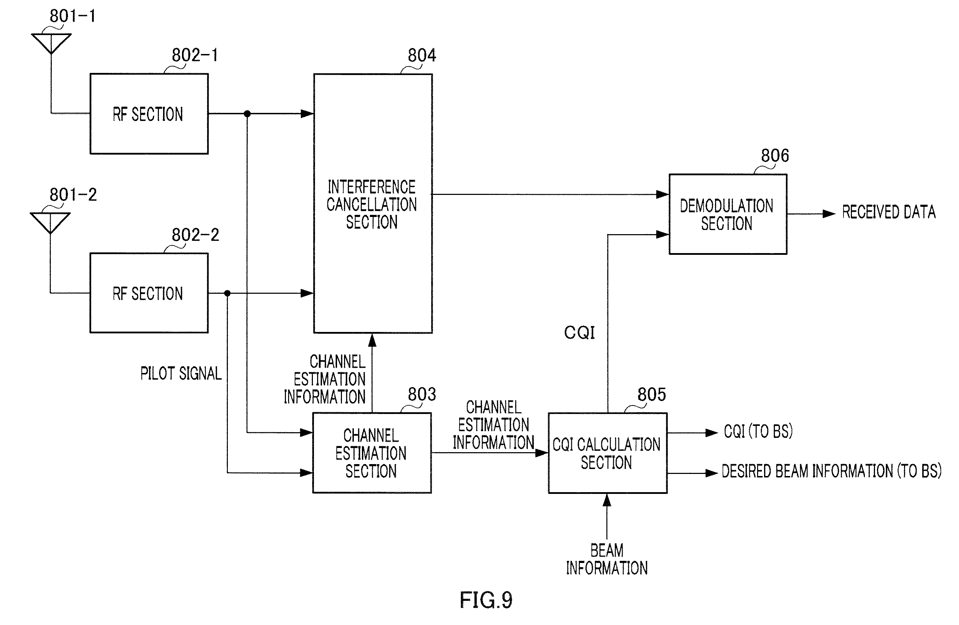

FIG.9 is a block diagram showing a configuration of the MIMO UE shown in FIG. 2. In this figure, RF sections 802-1 and 802-2 receive signals transmitted from the BS shown in FIG.3 through antennas 801-1 and 801-2 and perform predetermined radio reception processing such as down-conversion on the received signals. A data portion of the signal subjected to radio reception processing is outputted to interference cancellation section 804, and a pilot signal is outputted to channel estimation section 803.

Channel estimation section 803 performs channel estimation using the pilot signals outputted from RF sections 802-1 and 802-2 and outputs estimated values to interference cancellation section 804 and CQI calculation section 805 as channel estimation information.

Interference cancellation section 804 calculates weights such as ZF and MMSE from the channel estimation information outputted from channel estimation section 803, multiplies the data portion outputted from RF sections 802-1 and 802-2 by the calculated weights, thereby suppresses interference from other users and extracts a desired signal. The signal, in which interference from other users is suppressed, is outputted to demodulation section 806.

CQI calculation section 805 calculates desired beam information and the CQI using the channel estimation information outputted from channel estimation section 803 and beam information shared between the BS and UE. More specifically, CQI calculation section 805 calculates a CQI in a case of using each transmission beam and feeds back a maximum value of the calculated CQI and transmission beam in this case to the BS as desired beam information. Furthermore, a CQI in a previous frame is outputted to demodulation section 806.

Demodulation section 806 determines a modulation scheme and coding rate (MCS) from the CQI outputted from CQI calculation section 805, performs demodulation and decoding processing on the signal outputted from interference cancellation section 804 using the determined modulation scheme and coding rate and acquires received data.

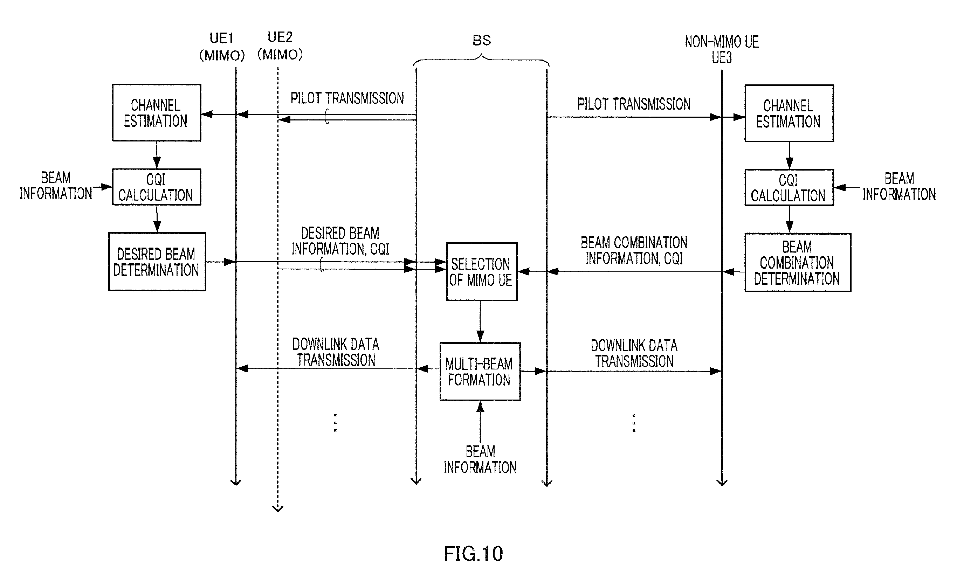

Next, operations of the BS, non-MIMO UE and MIMO UE shown in FIG.2 will be explained with reference to FIG.10. The BS transmits pilot signals orthogonal to each other between the antennas of the BS to each UE, and each UE acquires channel estimation values using the received pilot signals. Each UE calculates a CQI (received SINR) from the beam information shared with the BS and the channel estimation value.

Here, the MIMO UE determines a transmission beam of a maximum CQI as desired beam information out of transmission beam candidates included in the beam information, and feeds back the CQI and desired beam information in this case to the BS.

On the other hand, the non-MIMO UE determines a transmission beam of a maximum received SIR or SINR and the transmission beam of the MIMO UE as beam combination information from the transmission beam candidates included in the beam information and the transmission beam candidates of the MIMO UE, which is a target of multi-user communication, and feeds back the CQI and the beam combination information in this case to the BS.

The BS determines users to whom space resources are allocated in scheduler section 102. More specifically, the BS selects UE1 as a MIMO UE that desires the same transmission beam as the beam information specified by the non-MIMO UE for the MIMO UE, which is a target of multi-user communication, based on the information fed back from each UE. The BS forms a multi-beam using beams desired by the non-MIMO UE and UE1 and transmits downlink data to the respective UE's.

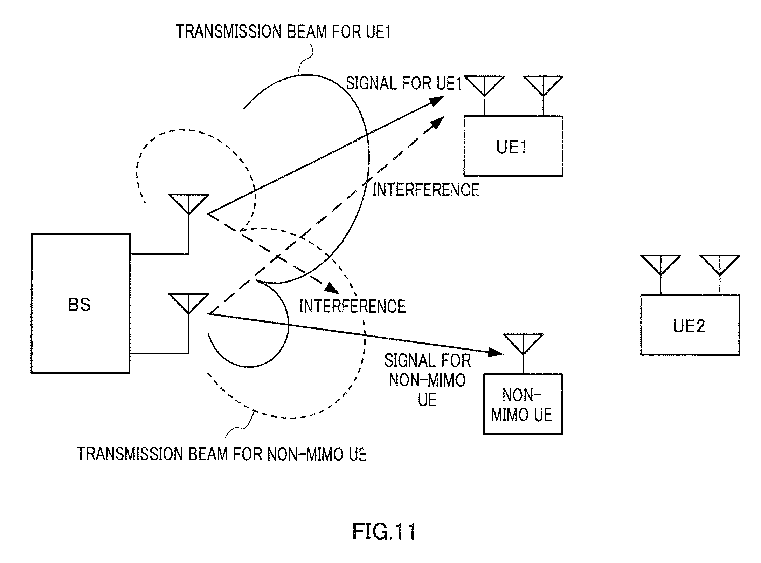

The transmission beams formed in this way are as shown in Fig.11. As is also clear from FIG.11, the amount of interference to the non-MIMO UE is reduced, and the non-MIMO UE can be accommodated in a Multi-User MIMO system. On the other hand, UE1 is a MIMO UE and has signal separation processing capability, and therefore, even if interference to UE1 is not reduced, the received quality of UE1 is not affected. If interference to UE1 is also reduced, it is possible to improve the CQI of UE1 and increase the MCS level, so that throughput can be improved.

In this way, according to Embodiment 1, a desired beam is allocated to the non-MIMO UE preferentially over the MIMO UE, and the non-MIMO UE specifies a beam for the other MIMO UE, which is a target of multi-user communication, and the non-MIMO UE can thereby reduce interference from the other MIMO UE that performs multi-user communication, so that it is possible to accommodate the non-MIMO UE in the Multi-User MIMO system. This increases the number of terminals that can be accommodated in the Multi-User MIMO system, so that it is possible to increase the multi-user diversity gain and improve system throughput. Furthermore, the UE side selects a beam, and so the UE reports a receiving state when each beam is used, to the BS, thereby realizing link adaptation taking the amount of interference into consideration.

(Embodiment 2)

Although a case has been described with Embodiment 1 where a beam is allocated to the non-MIMO UE preferentially over the MIMO UE, a case will be described with Embodiment 2 of the present invention where a beam is allocated to a MIMO UE showing high channel correlation out of a plurality of MIMO UE's.

With the present embodiment, the number of antennas of a BS and UE each is two, and the number of UE's accommodated in the cell of this BS is three (UE1 to 3). Furthermore, the BS forms transmission beams, and information of this beam (beam information) is shared between the BS and UE.

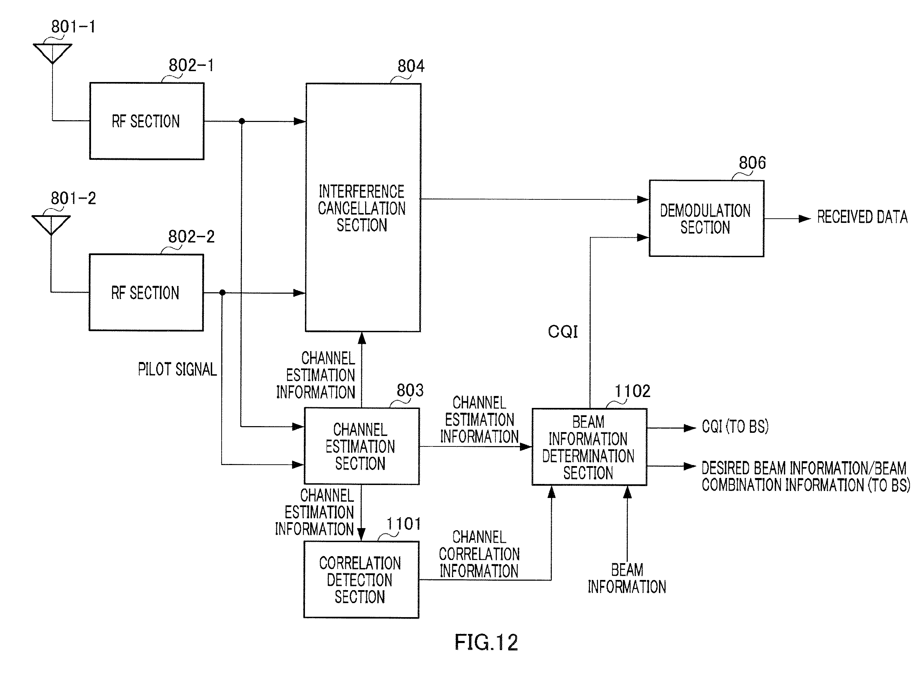

FIG.12 is a block diagram showing a configuration of a UE according to Embodiment 2 of the present invention. FIG.12 differs from FIG.9 in that correlation detection section 1101 is added and CQI calculation section 805 is replaced with beam information determination section 1102.

In FIG.12, correlation detection section 1101 detects channel correlation using channel estimation information outputted from channel estimation section 803 and outputs the detected channel correlation information to beam information determination section 1102. Here, if the channel estimation information is H and channel correlation information is p, p can be represented by following equation 9.

[9]

$$\rho = \frac{E[h_{ij}^* h_{xy}]}{\sqrt{E[|h_{ij}|^2]}\sqrt{E[|h_{xy}|^2]}} \quad \dots \text{(Equation 9)}$$

where E [ ] is an ensemble average and $h_{ij}$ and $h_{xy}$ are elements of MIMO channel matrix H. However, $h_{ij} \neq h_{xy}$.

Beam information determination section 1102 calculates a CQI based on the channel estimation information outputted from channel estimation section 803, channel correlation information outputted from correlation detection section 1101 and beam information, outputs the calculated CQI to demodulation section 806 and feeds back the CQI to the BS as well. Furthermore, beam information determination section 1102 also generates desired beam information or beam combination information and feeds back the information to the BS. Beam information determination section 1102 functions as a beam combination determination means.

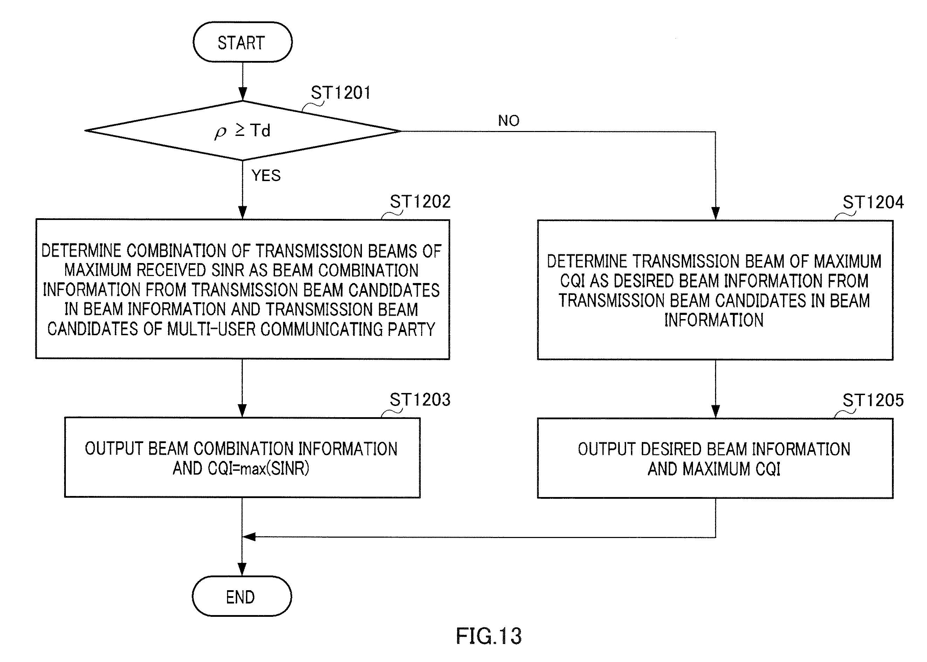

Next, the operation of beam information determination section 1102 will be explained using FIG.13. In FIG.13, in ST1201, it is decided whether or not channel correlation information p is equal to or greater than predetermined threshold Td, the flow proceeds to ST1202 if channel correlation information p is equal to or greater than threshold Td or proceeds to ST1204 if channel correlation information p is less than threshold Td.

In ST1202, a combination of transmission beams of a maximum received SINR is determined as beam combination information from transmission beam candidates in the beam information and transmission beam candidates of other users, and in ST1203, the beam combinationinformationandCQI=max (SINR) are outputted.

On the other hand, if channel correlation information p is less than threshold Td, in ST1204, a transmission beam of a maximum CQI is determined as a desired beam from transmission beam candidates in the beam information, and in ST1205, the desired beam information and maximum CQI are outputted.

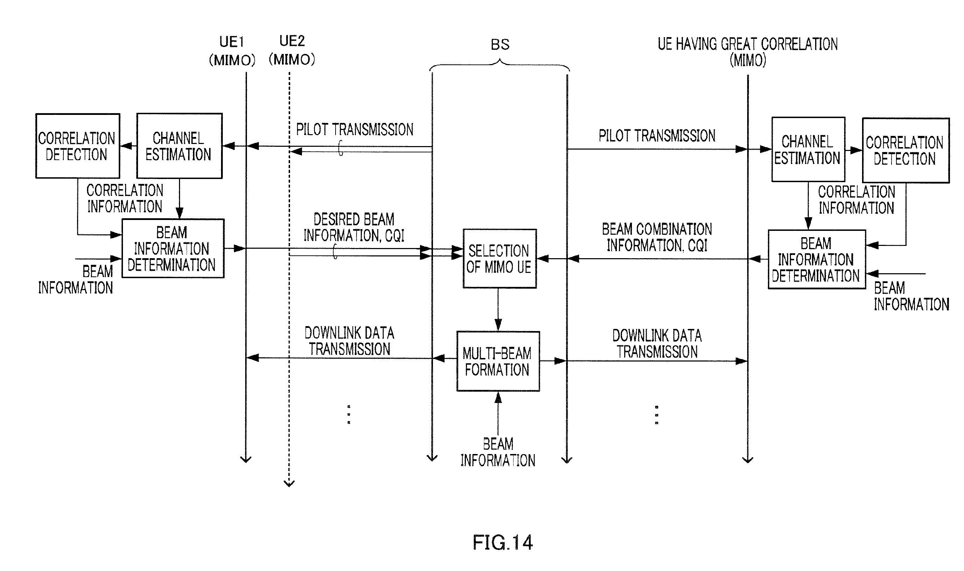

Next, the operation between the UE and BS according to Embodiment 2 of the present invention will be explained with reference to FIG. 14. The BS transmits the pilot signal orthogonal to each other between the antennas of the BS to each UE, and each UE acquires a channel estimation value using the received pilot signal. Furthermore, each UE detects channel correlation from the channel estimation value. Furthermore, each UE calculates a CQI (received SINR) from the beam information and channel estimation information shared with the BS. The CQI calculation method varies depending on the channel correlation information.

If it is assumed that UE1 and UE2 have low channel correlation, UE1 and UE2 determine the transmission beams of a maximum CQI as desired beam information out of transmission beam candidates included in the beam information, and feed back the CQI's and desired beam information in this case to the BS.

On the other hand, if it is assumed that UE3 has high channel correlation, UE3 is regarded to be allocated a beam preferentially over other users, and therefore UE3 determines a transmission beam of a maximum received SIR or SINR and the transmission beam of the MIMO UE as beam combination information from the transmission beam candidates included in the beam information and transmission beam candidates of other users, and feeds back the CQI and beam combination information in this case to the BS.

The BS determines users to whom space resources are allocated in scheduler section 102. More specifically, the BS selects UE1 as the other user who desires the same transmission beam as the beam information specified for the other user by UE3 having high channel correlation, based on the information fed back from each UE. The BS forms a multi-beam using the beams desired by UE3 and UE1 and transmits downlink data to the respective UE's.

In this way, according to Embodiment 2, a desired beam is allocated to a MIMO UE having high channel correlation preferentially over a MIMO UE having low channel correlation, and thereby interference from the other user of the MIMO UE whose received SINR has deteriorated due to the high channel correlation can be reduced, so that it is possible to improve the received SINR and improve system throughput.

Further, although, with the present embodiment, the number of users having high channel correlation is one, if there are a plurality of users having high channel correlation in the cell, scheduler section 102 of the BS allocates one stream to one user of a maximum CQI out of those users.

(Embodiment 3)

Although a case has been described with Embodiment 2 where beams are preferentially allocated to MIMO DE's having high channel correlation out of a plurality of MIMO UE's, a case will be described with Embodiment 3 where beams are preferentially allocated to MIMO UE's having low signal separation processing capability out of a plurality of MIMO UE's.

With the present embodiment, the number of antennas of the BS and UE each is two, and the number of UE's to be accommodated in the cell of this BS is three (UE1 to 3). Furthermore, the BS forms a transmission beam, and information of this beam (beam information) is shared between the BS and UE.

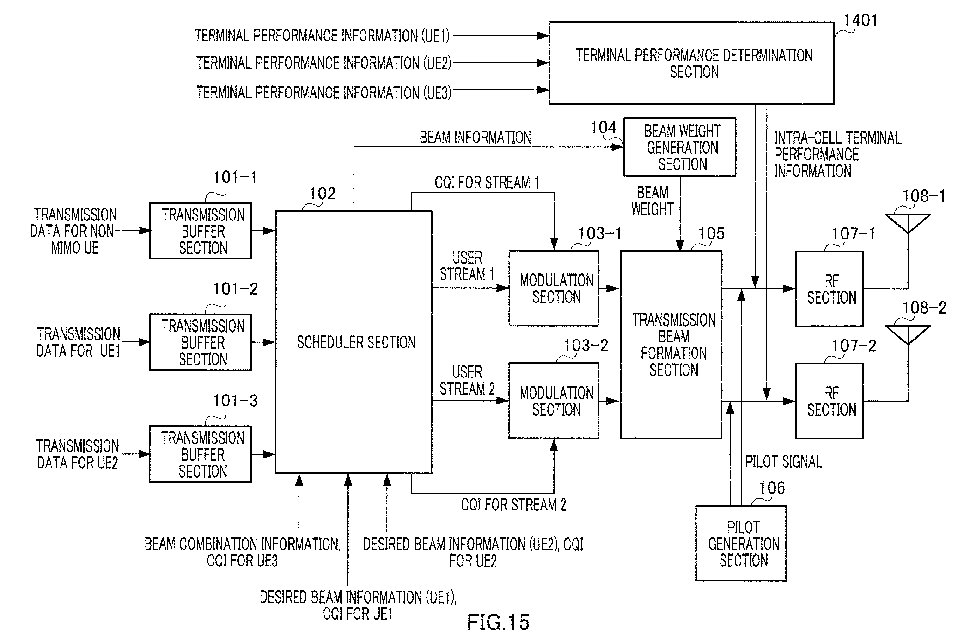

FIG.15 is a block diagram showing a configuration of the BS according to Embodiment 3 of the present invention. FIG.15 differs from FIG.3 in that terminal performance determining section 1401 is added.

In FIG.15, terminal performance determination section 1401 acquires terminal performance (signal separation capability) information of the UE from each UE, calculates intra-cell terminal performance information, which serves as a reference for the UE to decide terminal performance, based on the highest terminal performance in the cell and transmits the calculated intra-cell terminal performance information to each UE.

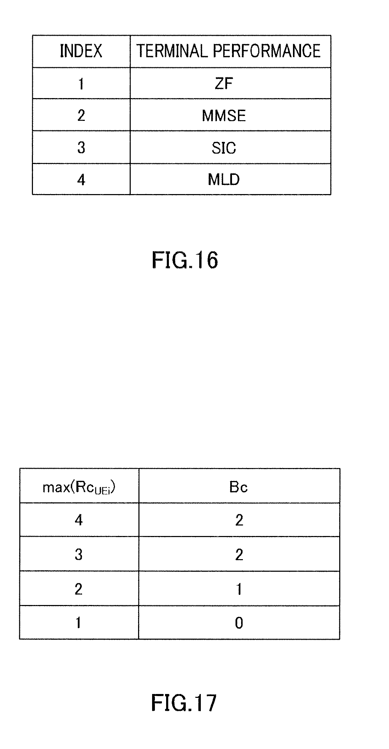

Terminal performance determination section 1401 shares, for example, a terminal performance table as shown in FIG.16 with each UE. In FIG.16, ZF refers to signal separation processing using a Zero Forcing method, MMSE refers to signal separation processing using a minimum mean square error method, SIC refers to signal separation processing using a successive interference canceller such as V-BALST and MLD refers to signal separation processing using a maximum likelihood estimation method. Furthermore, when the index is greater, the signal separation capability is higher.

Terminal performance determination section 1401 receives a report on such index information as terminal performance information $Rc_{UEi}$ from each UE and determines intra-cell terminal performance information Bc from reported terminal performance information $Rc_{UEi}$ based on the intra-cell terminal performance determining table shown in FIG.17.

As shown in FIG.17, when the terminal having the highest signal separation capability in the cell is an MLD terminal ($Rc_{UEi}$=4), whether or not MMSE processing can be performed serves as a reference (Bc=2) to decide terminal performance of each UE. The reference is the same even when the terminal having the highest signal separation capability in the cell is an SIC terminal ($Rc_{UEi}$=3).

On the other hand, when the terminal having the highest signal separation capability in the cell is an MMSE terminal 1 ($Rc_{UEi}$=2), whether or not ZF processing can be performed serves as a reference (Bc=1) to decide terminal performance of each UE.

Furthermore, when there is only a ZF terminal ($Rc_{UEi}$=1) in the cell, there is no performance difference between the terminals, and therefore Bc=0 and each UE does not decide its terminal performance.

Further, although, with the present embodiment, the terminal performance are divided into four stages, it is also possible to introduce reception processing other than that shown in FIG.16 and further increase the number of stages of terminal performance. Furthermore, it is also possible to flexibly determine the intra-cell terminal performance according to the stage of terminal performance.

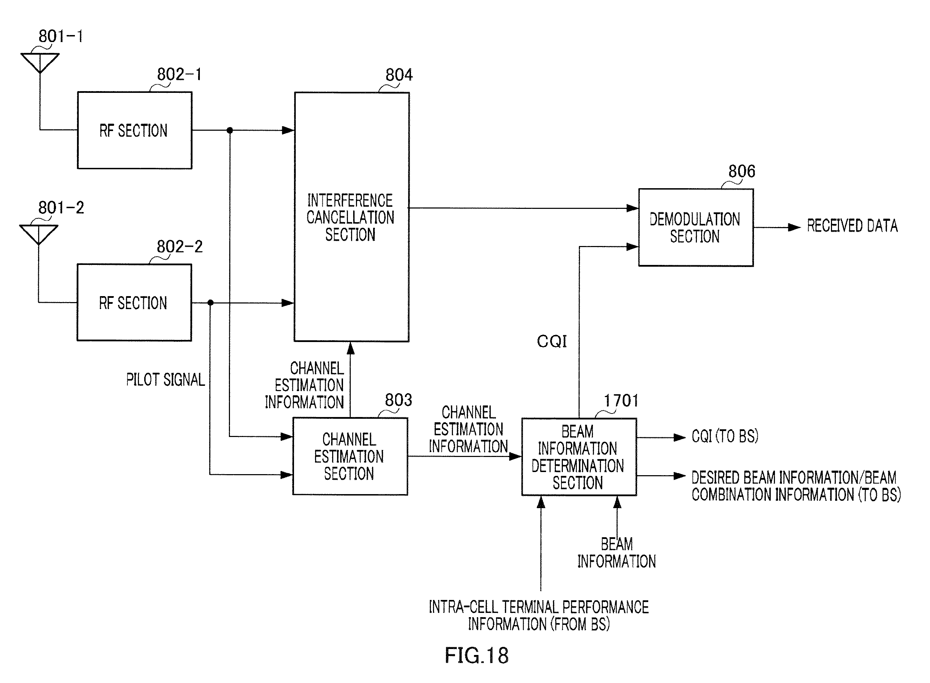

FIG.18 is a block diagram showing a configuration of the UE according to Embodiment 3 of the present invention. FIG.18 differs from FIG.12 in that correlation detection section 1101 is removed and beam information determination section 1102 is replaced with beam information determination section 1701.

Beam information determination section 1701 decides terminal performance of the terminal based on intra-cell terminal performance information Bc transmitted from the BS, calculates a CQI according to the terminal performance of the terminal, outputs the calculated CQI to demodulation section 806 and also feeds back the CQI to the BS. Furthermore, beam information determination section 1701 generates desired beam information or beam combination information and feeds back the information to the BS. Beam information determination section 1701 functions as a beam combination determination means.

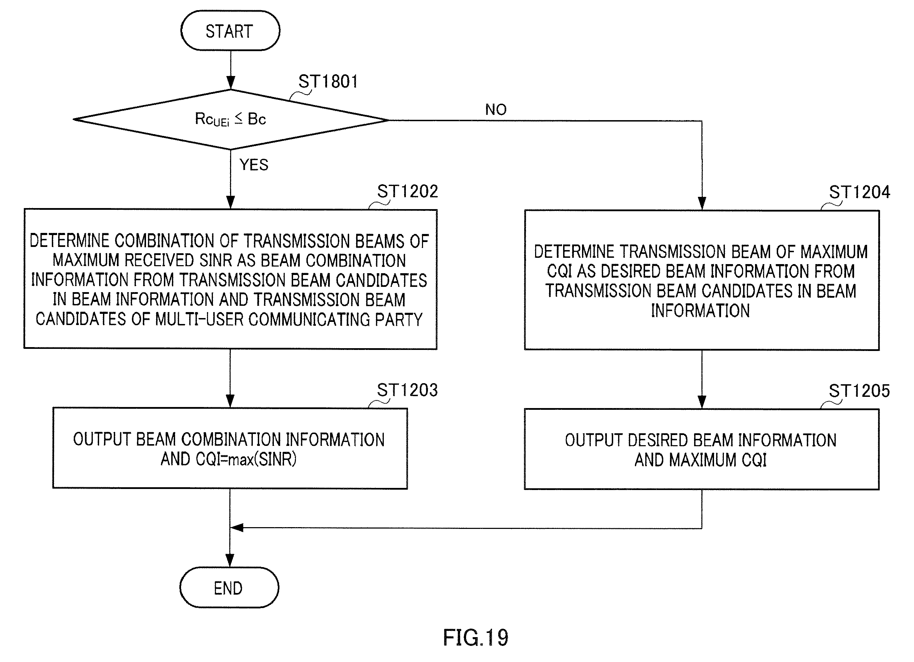

Next, the operation of beam information determination section 1701 will be explained using FIG.19. However, parts in FIG.19 common to those in FIG.13 will be assigned the same reference numerals and overlapping explanations will be omitted. In FIG.19, in ST1801, it is decided whether or not terminal performance information $Rc_{UEi}$ of the terminal is equal to or lower than intra-cell terminal performance information Bc transmitted from the BS. For example, if Bc=2 and $Rc_{UE1}$=4, it is decided that UE1 has high signal separation capability, and if Bc=2 and $Rc_{UE3}$=2, it is decided that UE3 has low signal separation capability. When terminal performance information $Rc_{UEi}$ is equal to or lower than intra-cell terminal performance information Bc, the flow proceeds to ST1202, and, when terminal performance information $Rc_{UEi}$ exceeds intra-cell terminal performance information Bc, the flow proceeds to ST1204.

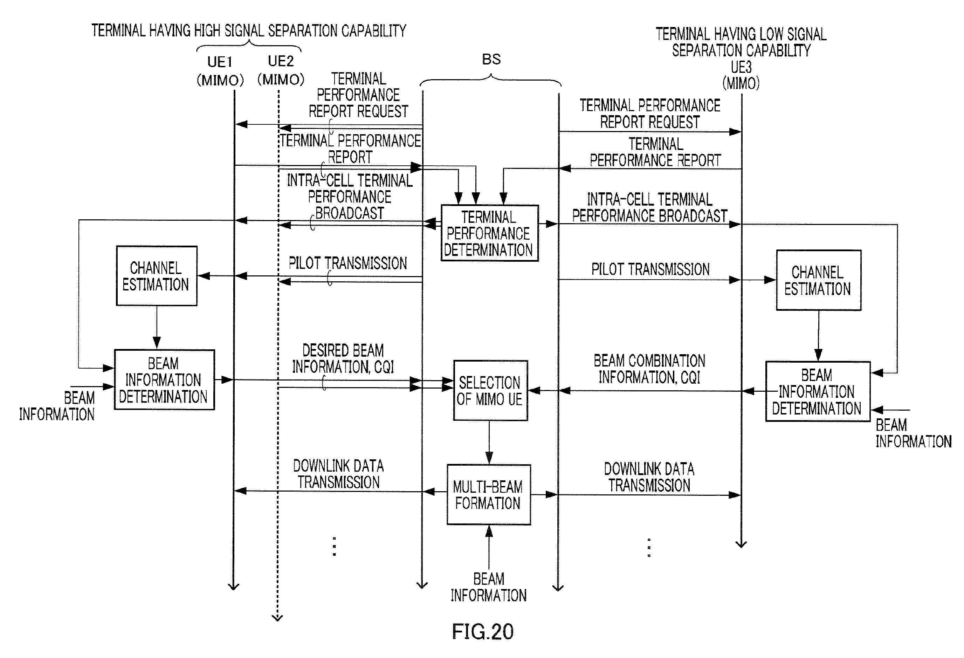

Next, the operation between the UE and BS according to Embodiment 3 of the present invention will be explained with reference to FIG.20. The BS requests each UE to report the terminal performance to learn the signal separation capability of each UE. In response to this, each UE reports the signal separation capability to the BS.

The BS reports intra-cell terminal performance information to all UE's as information, which serves as a reference for each UE in the cell to decide signal separation capability, based on the signal separation capability reported from each UE. Each UE decides the signal separation capability of each terminal based on the reported intra-cell terminal performance information. Here, it is decided that UE1 and UE2 have high signal separation capabilities and UE3 has low signal separation capability.

The BS transmits pilot signals orthogonal to each other between the antennas of the BS to each UE, and each UE acquires a channel estimation value using the received pilot signal. Furthermore, each UE calculates a CQI (received SINR) from beam information and channel estimation information shared with the BS. However, the CQI calculation method varies depending on the signal separation capability of each UE.

It is assumed that UE1 and UE2 have high signal separation capabilities, and so UE1 and UE2 determine the transmission beam of a maximum CQI as desired beam information out of transmission beam candidates included in the beam information, and feed back the CQI and desired beam information in this case to the BS.

On the other hand, it is assumed that UE3 has low signal separation capability, and so UE3 is regarded to be allocated a beam preferentially over other users, and UE3 determines the transmission beam of a maximum received SIR or SINR and MIMO UE transmission beam as beam combination information from transmission beam candidates included in the beam information and transmission beam candidates of other users, and feeds back the CQI and beam combination information in this case to the BS.

The BS determines users to whom space resources are allocated through scheduler section 102. More specifically, the BS selects UE1 as the other user who desires the same transmission beam as the beam information specified for the other user by UE3 having high channel correlation, based on the information fed back from each UE. The BS forms a multi-beam using beams desired by UE3 and UE1 and transmits downlink data to the respective UE's.

In this way, according to Embodiment 3, a desired beam is allocated to a UE having relatively low signal separation capability in the cell preferentially over a UE having high signal separation capability, and thereby the UE having low signal separation capability can reduce interference from other users.

Further, although, with the present embodiment, the number of terminals having low signal separation capabilities is one, when there are a plurality of terminals having low signal separation capabilities in the cell, scheduler section 102 of the BS allocates one stream to one terminal of a maximum CQI out of those terminals.

Also, although cases have been described with the above embodiment as examples where the present invention is configured by hardware, the present invention can also be realized by software.

Further, each function block employed in the description of each of the aforementioned embodiments may typically be implemented as an LSI constituted by an integrated circuit. These may be individual chips or partially or totally contained on a single chip. "LSI" is adopted here but this may also be referred to as "inc," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The base station (BS) in the above embodiments may be represented as "Node B."

The disclosure of Japanese Patent Application No.2006-083897, filed on March 24, 2006, including the specification, drawings and abstract, is incorporated herein by reference in its entirety.

Industrial Applicability

The wireless communication terminal apparatus and wireless communication base station apparatus according to the present invention enable a wireless communication terminal apparatus having low interference suppression capability to be accommodated in a Multi-User MIMO system and are applicable to aMulti-UserMIMO system.

**Claims**

**1.** A wireless communication terminal apparatus comprising:

EP 1 988 653 A1

a reception section that receives a pilot signal transmitted from a wireless communication base station apparatus;
a channel estimation section that performs channel estimation using the pilot signal and calculates a channel estimation value; and
a beam combination determination section that has a plurality of pieces of beam information formed by the wireless communication base station apparatus, determines a combination of a desired beam of maximum received quality determined from the channel estimation value and beams for other users, who are targets of multi-user communication, and feeds back the determined beam combination to the wireless communication base station apparatus.

2. The wireless communication terminal apparatus according to claim 1, further comprising a correlation detection section that detects channel correlation using the channel estimation value,
wherein, when the channel correlation is equal to or higher than a predetermined threshold, the beam combination determination section determines the beam combination.

3. The wireless communication terminal apparatus according to claim 1, wherein the beam combination determination section determines the beam combination when signal separation capability of the wireless communication terminal apparatus is relatively lower than other terminal apparatuses in a cell.

4. The wireless communication terminal apparatus according to claim 3, further comprising an interference cancellation section having signal separation capability of zero forcing or minimum mean square error.

5. A wireless communication base station apparatus comprising:

a beam formation section that forms a plurality of beams;
an allocation section that allocates wireless communication terminal apparatuses to space resources based on information of combination of a desired beam fed back from a wireless communication terminal apparatus and beams for other users, who are targets of multi-user communication, and desired beam information fed back from other wireless communication terminal apparatuses; and
a beam weight generation section that generates beam weights for controlling the beam formation section, based on beam information fed back from the wireless communication terminal apparatuses allocated to the space resources.

6. A transmission beam formation method comprising steps of:

determining a combination of a desired beam of maximum received quality and beams for other users, who are targets of multi-user communication, based on a plurality of pieces of beam information formed by a wireless communication base station apparatus and feeding back the determined beam combination from a wireless communication terminal apparatus to the wireless communication base station apparatus; and
forming transmission beams to the wireless communication terminal apparatus and the other users based on the fed back beam combination.

11

FIG.1

EP 1 988 653 A1

FIG.2

FIG.3

| $B_{comb}$ | DESIRED BEAM OF NON-MIMO UE | BEAM WHICH IS TARGET OF MULTI-USER COMMUNICATION |
|---|---|---|
| 1 | $w_1$ | $w_2$ |
| 2 | $w_1$ | $w_3$ |
| 3 | $w_2$ | $w_1$ |
| 4 | $w_2$ | $w_3$ |
| 5 | $w_3$ | $w_1$ |
| 6 | $w_3$ | $w_2$ |

FIG.4

```
                    ┌─────────┐
                    │  START  │
                    └─────────┘
                         │
                         ▼
                                          ST401        NO
              ◇ IS THERE NON-MIMO UE? ◇──────────────────────┐
                         │ YES                               │
                         ▼                                   ▼
                      ST402                               ST404
        ┌──────────────────────────────┐   ┌──────────────────────────────┐
        │ CQI FOR STREAM 1=CQ1_nonMIMO  │   │ ALLOCATE UE DATA OF LARGEST  │
        │ STREAM 1=NON-MIMO UE DATA     │   │ AND SECOND LARGEST CQI_UEi   │
        │ BEAM INFORMATION=B_comb       │   │ STREAMS 1 AND 2 RESPECTIVELY │
        └──────────────────────────────┘   └──────────────────────────────┘
                         │                                   │
                         ▼  ST403                            ▼  ST405
        ┌──────────────────────────────┐   ┌──────────────────────────────┐
        │ B_comb(MIMO)=B_UEi AND        │   │ BEAM INFORMATION=B_UEi       │
        │ ALLOCATE UE OF MAXIMUM        │   │ MATCHING CQI_UEi             │
        │ CQI_UEi STREAM 2              │   │                              │
        └──────────────────────────────┘   └──────────────────────────────┘
                         │                                   │
                         ◄───────────────────────────────────┘
                         ▼
                    ┌─────────┐
                    │   END   │
                    └─────────┘
```

CQI FOR STREAM 1=$CQ1_{nonMIMO}$
STREAM 1=NON-MIMO UE DATA
BEAM INFORMATION=$B_{comb}$

ALLOCATE UE DATA OF LARGEST AND SECOND LARGEST $CQI_{UEi}$ STREAMS 1 AND 2 RESPECTIVELY

$B_{comb}(MIMO)=B_{UEi}$ AND ALLOCATE UE OF MAXIMUM $CQI_{UEi}$ STREAM 2

BEAM INFORMATION=$B_{UEi}$ MATCHING $CQI_{UEi}$

FIG.5

EP 1 988 653 A1

BEAM
INFORMATION

503

CHANNEL
ESTIMATION
INFORMATION

504

CHANNEL
ESTIMATION
SECTION

BEAM COMBINATION
DETERMINATION SECTION

→ CQI (TO BS)

→ BEAM COMBINATION
INFORMATION (TO BS)

PILOT SIGNAL

CQI

501

502

505

RF SECTION

DEMODULATION
SECTION

→ RECEIVED DATA

FIG.6

FIG.7

FIG.8

FIG.9

EP 1 988 653 A1

FIG.10

TRANSMISSION BEAM FOR UE1

SIGNAL FOR UE1

UE1

INTERFERENCE

INTERFERENCE

SIGNAL FOR NON-MIMO UE

NON-MIMO UE

BS

UE2

TRANSMISSION BEAM FOR NON-MIMO UE

FIG.11

FIG.12

START

ST1201

$\rho \geq Td$

NO

YES

ST1202

DETERMINE COMBINATION OF TRANSMISSION BEAMS OF MAXIMUM RECEIVED SINR AS BEAM COMBINATION INFORMATION FROM TRANSMISSION BEAM CANDIDATES IN BEAM INFORMATION AND TRANSMISSION BEAM CANDIDATES OF MULTI-USER COMMUNICATING PARTY

ST1204

DETERMINE TRANSMISSION BEAM OF MAXIMUM CQI AS DESIRED BEAM INFORMATION FROM TRANSMISSION BEAM CANDIDATES IN BEAM INFORMATION

ST1203

OUTPUT BEAM COMBINATION INFORMATION AND CQI=max(SINR)

ST1205

OUTPUT DESIRED BEAM INFORMATION AND MAXIMUM CQI

END

FIG.13

FIG.14

FIG.15

EP 1 988 653 A1

| INDEX | TERMINAL PERFORMANCE |
|-------|----------------------|
| 1 | ZF |
| 2 | MMSE |
| 3 | SIC |
| 4 | MLD |

FIG.16

| $\max(Rc_{UEi})$ | Bc |
|-------------------|-----|
| 4 | 2 |
| 3 | 2 |
| 2 | 1 |
| 1 | 0 |

FIG.17

FIG.18

EP 1 988 653 A1

START

ST1801

$R_{CUEi} \leq B_c$

NO

YES

ST1202

DETERMINE COMBINATION OF TRANSMISSION BEAMS OF MAXIMUM RECEIVED SINR AS BEAM COMBINATION INFORMATION FROM TRANSMISSION BEAM CANDIDATES IN BEAM INFORMATION AND TRANSMISSION BEAM CANDIDATES OF MULTI-USER COMMUNICATING PARTY

ST1204

DETERMINE TRANSMISSION BEAM OF MAXIMUM CQI AS DESIRED BEAM INFORMATION FROM TRANSMISSION BEAM CANDIDATES IN BEAM INFORMATION

ST1203

OUTPUT BEAM COMBINATION INFORMATION AND CQI=max(SINR)

ST1205

OUTPUT DESIRED BEAM INFORMATION AND MAXIMUM CQI

END

FIG.19

FIG.20

## EP 1 988 653 A1

<table>
<tr><td colspan="2" align="center"><strong>INTERNATIONAL SEARCH REPORT</strong></td><td>International application No.<br>PCT/JP2007/056069</td></tr>
</table>

**A. CLASSIFICATION OF SUBJECT MATTER**
*H04J15/00*(2006.01)i, *H04B7/04*(2006.01)i, *H04B7/06*(2006.01)i, *H04B7/08*
(2006.01)i, *H04B7/10*(2006.01)i, *H04B7/26*(2006.01)i

According to International Patent Classification (IPC) or to both national classification and IPC

**B. FIELDS SEARCHED**

Minimum documentation searched (classification system followed by classification symbols)
H04J15/00, H04B7/04, H04B7/06, H04B7/08, H04B7/10, H04B7/26

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,X<br>E,A | JP 2006-333482 A  (NTT Docomo Inc.),<br>07 December, 2006 (07.12.06),<br>Full text; all drawings<br>& US 2006/0268769 A1    & EP 1727298 A2 | 1,5,6<br>2-4 |
| A | JP 2006-005908 A  (Matsushita Electric<br>Industrial Co., Ltd.),<br>05 January, 2006 (05.01.06),<br>Full text; all drawings<br>& WO 2005/114874 A1     & EP 1748579 A1 | 1-6 |
| A | JP 2004-194262 A  (NTT Docomo Inc.),<br>08 July, 2004 (08.07.04),<br>Par. Nos. [0074] to [0091]<br>(Family: none) | 1-6 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 April, 2007 (27.04.07) | Date of mailing of the international search report<br>15 May, 2007 (15.05.07) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006083897 A